# EUROPÄISCHE PATENTSCHRIFT

(11) **EP 1 923 266 B1**
(45) Veröffentlichungstag und Bekanntmachung des Hinweises auf die Patenterteilung: **14.10.2009**
(21) Anmeldenummer: 07022000.9
(22) Anmeldetag: 13.11.2007
(51) Int. Cl.: B60R 1/12, B60R 1/06, B60Q 1/26

(54) **Aussenrückblickspiegel für Fahrzeuge**
Exterior rear-view mirror for vehicles
Rétroviseur extérieur pour véhicules

(30) Priorität: 20.11.2006 DE 102006056069
(43) Veröffentlichungstag der Anmeldung: 21.05.2008
(73) Patentinhaber: SMR PATENTS S.à.r.l., 1653 Luxembourg (LU)
(72) Erfinder: Liesener, Alf, 73614 Schorndorf (DE); Bracht, Gernot Michael, 75399 Unterreichenbach (DE)
(74) Vertreter: Rausch, Gabriele

(56) Entgegenhaltungen:
- WO-A-01/59734
- JP-A- 3 050 044
- US-A- 4 916 430
- US-A- 5 892 438
- US-A- 5 938 320

## Beschreibung

Die Erfindung betrifft einen Außenrückblickspiegel für Fahrzeuge, nach dem Oberbegriff des Anspruches 1.

Es sind Außenrückblickspiegel bekannt, bei denen im Spiegelgehäuse eine Ausnehmung vorgesehen ist, in der die Lichtscheibe einer Leuchte untergebracht ist. Solche Spiegelleuchten haben ein Gehäuse mit einem Reflektor, ein vor dem Reflektor angeordnetes Leuchtmittel und eine Lichtscheibe. Derartige Leuchten sind als geschlossene Systeme ausgebildet, die als komplette Einheit in die Außenrückblickspiegel eingebaut sind. Sie weisen eine entsprechend des Reflektors oder zusätzlich verwendeter Optiken angepaßte Abstrahlung des vom Leuchtmittel ausgehenden Lichtes auf. Sie werden ein- bzw. ausgeschaltet und können als Dauerlicht die Funktion einer Positionsleuchte oder bei sich wiederholender Betätigung als Fahrtrichtungsanzeiger eingesetzt werden.

Aus der US 5 497 306 ist ein Signallichtmodul für eine Fahrzeugaußenspiegelbaugruppe bekannt. Zur Ausleuchtung des seitlichen Umfeldes der Fahrbahn ist eine Leuchte schräg von unten in das Außenspiegelgehäuse eingebaut. Die Leuchte besteht aus einem Leuchtengehäuse, das von einer Lichtscheibe abgedeckt wird und die ihrerseits bündig mit dem umlaufenden Spiegelgehäuse abschließt. Das vom Leuchtmittel ausgesandte Licht wird durch die Ausrichtung des Leuchtengehäuses schräg nach unten in Richtung auf die Fahrbahn im Bereich der Fahrertür abgestrahlt. Eine weitere Leuchte ist bei diesem Ausführungsbeispiel im unteren Rand des Spiegelrahmens integriert. Hierbei ist das Leuchtmittel eine LED, die das Licht entgegengesetzt zur Fahrtrichtung abstrahlt. Diese Leuchte kann als Positionsleuchte für den nachfolgenden Verkehr und als Fahrtrichtungsanzeiger dienen.

Es ist auch ein Außenrückblickspiegel für Fahrzeuge bekannt (DE 103 38 797 A1), der eine Leuchte zur Beleuchtung eines seitlichen Umfeldes/Fahrbahn aufweist. Der Außenrückblickspiegel weist einen Spiegelfuß und einen gegenüberliegenden schwenkbaren Spiegelkopf auf. Im Trennbereich zwischen dem Spiegelfuß und dem Spiegelkopf ist eine Leuchte vorgesehen. Sie ist an einem zwischen dem Spiegelfuß und dem Spiegelkopf angeordneten Zwischenträger befestigt und kann entsprechend ihrer Dimensionierung weit in den Spiegelkopf hineinragen. Diese Umfeldbeleuchtung kann mit einer Leuchte als Fahrtrichtungsanzeiger im selben Spiegelgehäuse kombiniert werden.

Einen Aussenrückblickspiegel mit den Merkmalen des Oberbegriffs des Anspruchs 1 ist aus der US-A-5 892 438 bekannt.

Der Erfindung liegt die Aufgabe zugrunde, den gattungsgemäßen Außenrückblickspiegel so auszubilden, daß mit der Leuchte unterschiedliche Lichtfunktionen sowie unterschiedliche Leuchtrichtungen ausgeführt werden können.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel ist zumindest ein Teil der Leuchte verstellbar. Dadurch kann die Leuchte unterschiedliche Lichtfunktionen erfüllen und/oder Licht in verschiedenen Richtungen abstrahlen. So kann die Leuchte zur Beleuchtung des fahrzeugnahen seitlichen Umfeldes der Fahrbahn sowie zum Abstrahlen von Licht in Fahrtrichtung oder zur Seite des Fahrzeuges hin eingesetzt werden. Bei der erfindungsgemäßen Lösung wird mit nur einer Leuchte ist sehr großer Ausleuchtungsbereich möglich. Vorteilhaft kann die Leuchte durch einen kombinierten Verstellmechanismus unabhängig voneinander in zwei verschiedene Richtungen geschwenkt werden. Es ist dadurch möglich, die Leuchte für vielfältige Funktionen einzusetzen. Beispielsweise kann die Leuchte als Fahrtrichtungsanzeiger als auch als Positionsleuchte oder als Tagfahrlicht bzw. zur seitlichen Umfeldausleuchtung oder mehrerer dieser Beleuchtungsarten in Kombination eingesetzt werden.

Bei einem in Parkposition an das Fahrzeug geklappten Außenrückblickspiegel wird der Spiegelkopf durch eine im allgemeinen schräge Trennung zwischen Spiegelfuß und Spiegelkopf zum Fahrzeug geschwenkt, wobei der Spiegelkopf eine leichte Schräglage einnimmt. Eine fest eingebaute Leuchte ändert bereits durch diese leichte Schrägstellung ihre Abstrahlrichtung in erheblichem Umfang. Im Gegensatz dazu ist bei der erfindungsgemäßen Leuchte eine Kompensation möglich. Die Leuchte kann in diesem Fall um den zu korrigierenden Winkelbetrag in einer oder zwei Ebenen entsprechend geschwenkt werden. Für eine kostengünstige Ausbildung dieser schwenkbaren Leuchte kann auch ein feststehendes Leuchtmittel mit einem verschwenkbaren Reflektor vorgesehen werden.

Als kostengünstige Ausführung kann die Leuchte mit einem Leuchtenträger einstückig ausgebildet sein. Dieses kombinierte Bauteil aus Leuchte und Leuchtenträger ist vorteilhaft um die Mittelachse des Leuchtenträgers schwenkbar im Spiegelgehäuse angeordnet. Damit ist eine Ausleuchtung in einer zur Schwenkachse des Leuchtenträgers orthogonalen Ebene möglich.

Bei einer einfach oder zweifach schwenkbaren Leuchte in einem Spiegelgehäuse kann die zur Verstellung notwendige Mechanik entsprechend als optischer Blickfang ausgeführt werden.

Selbstverständlich kann auch als Ersatz für die Leuchte oder in Kombination mit der Leuchte ein Sensor eingesetzt sein, der entsprechend der Schwenkwinkel der Leuchte eine Umfelderfassung in verschiedene Richtungen durchführen kann.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine Teilansicht einer verstellbaren Leuchte eines erfindungsgemäßen Außenrückblickspiegels,
- Fig. 2: teilweise im Schnitt und teilweise in Ansicht eine verstellbare Leuchte mit einer Verstelleinrichtung und einem Antrieb innerhalb des erfndungsgemäßen Außenrückblickspiegels,
- Fig. 3: in einer Darstellung entsprechend Fig. 2 eine weitere Ausführungsform eines nicht-erfindungsgemäßen Außenrückblickspiegels,
- Fig. 4: in einer Darstellung entsprechend Fig. 2 eine weitere Ausführungsform eines nicht-erfindungsgemäßen Außenrückblickspiegels,
- Fig. 5: in Seitenansicht den Außenrückblickspiegel gemäß Fig. 4,
- Fig. 6: in Seitenansicht einen nicht-erfindungsgemäßen Außenrückblickspiegel mit einem Lichtfenster und einer dem Öffnungswinkel des Lichtfensters entsprechenden verstellbaren Leuchte.

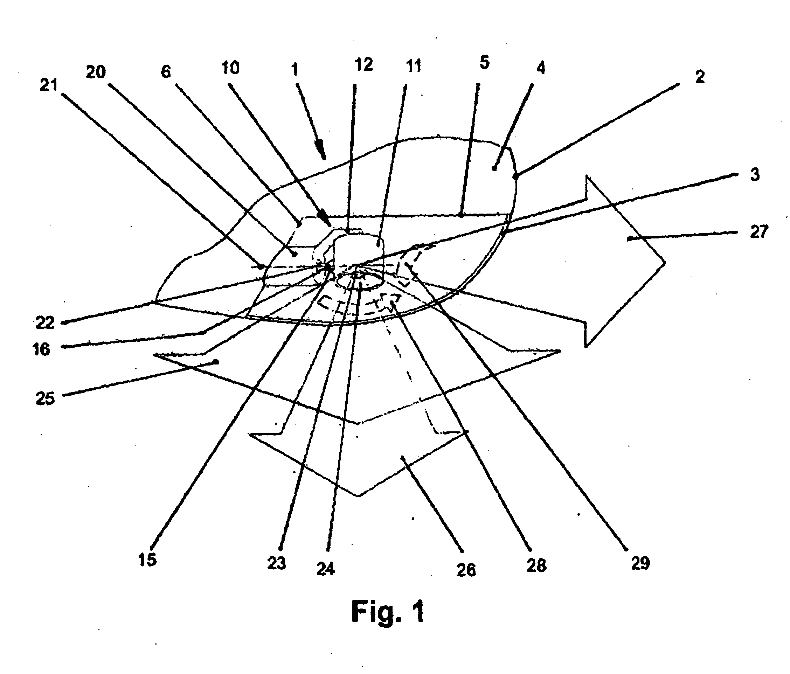

Fig. 1 zeigt einen Teil einer verstellbaren Leuchte 10, die in einem Außenrückblickspiegel 1 untergebracht ist. Er hat einen Spiegelfuß 30, mit dem er am Kraftfahrzeug befestigt wird, und einen Spiegelkopf 7, der gegenüber dem Spiegelfuß 30 in und entgegen Fahrtrichtung abklappbar ist. Der Spiegelkopf 7 kann hierbei um eine Achse in beiden Richtungen (Einachsspiegel) oder um zwei unterschiedliche Achsen (Zweiachsspiegel) gegenüber dem Spiegelfuß 30 verschwenkbar sein. Vorteilhaft kann der Spiegelkopf 7 auch in eine Parkstellung abklappbar sein, in der er an der Seite des Kraftfahrzeuges liegt.

Der Spiegelkopf 7 hat ein Gehäuse 2, in dem ein Spiegelglas untergebracht ist, das in bekannter Weise mittels eines Antriebes einstellbar ist.. Das Gehäuse 2 hat einen Leuchtenraum 4, der durch eine seitliche und eine obere Begrenzung 5, 6 von einem das Spiegelglas enthaltenden Raum getrennt ist. Der Leuchtenraum 4 ist durch eine transparente Lichtscheibe 3 verschlossen, die so in eine Öffnung 8 des Gehäuses 2 eingesetzt ist, daß sie eine stetige Fortsetzung des Gehäuses 2 bildet.

Im Leuchtenraum 4 befindet sich die Leuchte 10, die in der Gebrauchslage des Spiegelkopfes 7 um eine horizontale und eine vertikale Achse schwenkbar ist. In einer ersten vertikalen Leuchtrichtung 26 (Fig. 1) leuchtet die Leuchte 10 eine dem Fahrzeug benachbarte seitliche Fahrbahn aus. In einer zweiten Lage ist die Leuchte 10 in eine horizontale Leuchtrichtung 25 schwenkbar, in der sie das Licht in Fahrtrichtung des Fahrzeuges abstrahlt. Aus dieser oder der vorigen Position kann die Leuchte 10 in eine seitliche Leuchtrichtung 27 geschwenkt werden, so daß benachbarte Fahrzeuge oder Gegenstände, wie beispielsweise eine Garagenwand, angestrahlt werden können. Innerhalb dieser schwenkbaren Leuchtrichtungen 25 bis 27 kann die Leuchte 10 auch beliebige Zwischenstellungen einnehmen, so daß sie beispielsweise als Positionsleuchte mit einem leicht schrägen Abstrahlwinkel einsetzbar ist. Die Lichtscheibe 3 ist so vorgesehen, daß das von der Leuchte 10 abgestrahlte Licht in jeder Schwenklage nach außen gelangt.

Das Schwenken der Leuchte 10 in die drei wesentlichen Leuchtrichtungen 25 bis 27 wird durch eine zweigelenkige Lagerung der Leuchte 10 an einem entsprechenden Verstellmechanismus erreicht. Hierzu ragt durch die seitliche Begrenzung 6 des Leuchtenraumes 4 ein Leuchtenträger 20, der vorzugsweise zylindrisch ausgebildet (Fig. 1) und um seine Längsachse 21 drehbar ist. In der Gebrauchslage liegt die Drehachse 21 horizontal. Der Leuchtenträger 20 ist als Hohlkörper ausgebildet, in dem eine Schubstange 22 geführt ist. Sie ist mit einem Ende über ein Gelenk 16 an einem Gelenkflansch 15 gelagert, der an der Außenseite der Leuchte 10 befestigt ist. An die Stirnseite des Leuchtenträgers 20 schließt ein Tragarm 12 an, der so gekröpft ist, daß er über ein Gelenk 14 mit einem Gelenkflansch 13 an der Leuchte 10 verbunden ist. Die beiden Achsen der Gelenke 14, 16 liegen parallel zueinander und sind, bezogen auf die Leuchte 10, um 90° versetzt zueinander angeordnet.

Die Leuchte 10 hat ein rohrförmiges Leuchtengehäuse 11, in dem ein Reflektor 24 untergebracht ist. Im Brennpunkt des Reflektors 24 befindet sich ein Leuchtmittel 23, das als Glühlampe, LED oder dgl. ausgebildet sein kann.

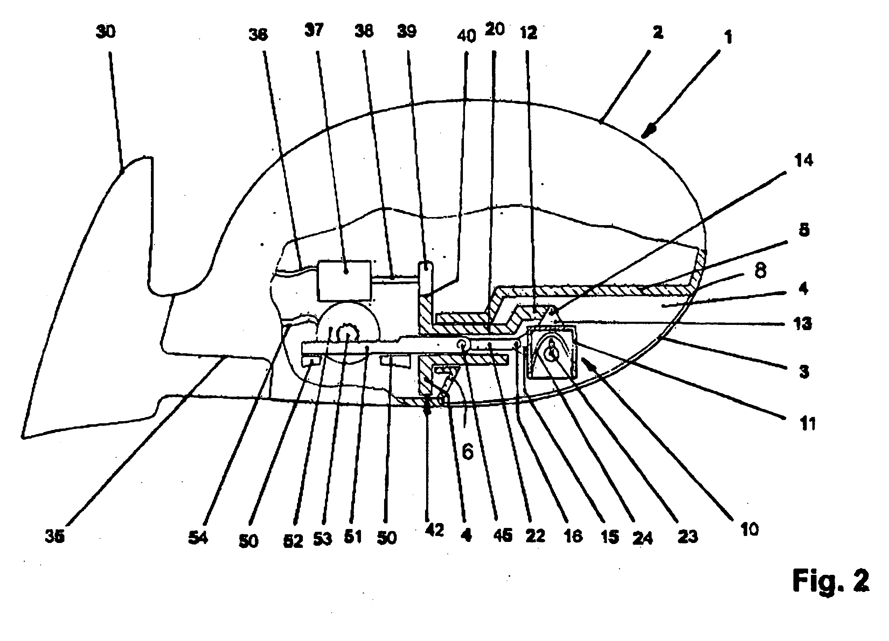

In der Lage gemäß Fig. 2 verläuft die Leuchtrichtung der Leuchte 10 vertikal nach unten. Soll die Leuchte 10 beispielsweise so geschwenkt werden, daß sie ihr Licht in Fahrtrichtung des Kraftfahrzeuges nach vom abstrahlt, wird der Leuchtenträger 20 um seine Achse 21 entsprechend gedreht. Hierbei schwenken der Tragarm 12 und die Schubstange 22 um den gleichen Winkel, so daß das Leuchtengehäuse 11 entsprechend mitgenommen wird. Soll die Leuchte 10 in die seitliche Richtung 27 (Fig. 1) Licht abstrahlen, wird die Schubstange 22 in Richtung auf die Leuchte 10 verschoben. Dabei verschwenkt das Leuchtengehäuse 11 um das in einem rückseitigen Bereich angebrachte Gelenk 14. Entsprechend des Verschiebeweges der Schubstange 22 lassen sich vielfältige Winkelstellungen einnehmen. Selbstverständlich können der Leuchtenraum 4 mit der Lichtscheibe 3 so ausgebildet sein, daß auch eine Leuchtrichtung entgegengesetzt zur Fahrtrichtung ermöglicht werden kann.

Durch diese vielfältigen einstellbaren Leuchtrichtungen lassen sich unterschiedlichste Leuchtfunktionen einstellen. Beispielsweise kann bei einer horizontalen Leuchtrichtung 25 in Fahrtrichtung nach vorn die Leuchte 10 als Tagfahrlicht verwendet werden. In dieser Position sowie in den Zwischenpositionen kann die Leuchte 10 als Positionsleuchte dienen. Bei einer im wesentlichen seitlichen Leuchtrichtung 27 können, wie erwähnt, neben dem Kraftfahrzeug befindliche Gegenstände oder Hindernisse beleuchtet werden. Eine solche Seitenausleuchtung kann auch als zusätzliche Hilfe beim Einparken des Fahrzeuges dienen, In der Leuchtenfunktion als Tagfahrlicht bzw. Positionsleuchte kann bei der Verwendung einer LED als Leuchtmittel 23 verschiedenfarbiges Licht abgestrahlt werden. Hierbei ist es möglich, daß die Leuchte 10 einzeln oder beispielsweise gleichzeitig mit dem Tagfahrlicht als Fahrtrichtungsanzeiger eingesetzt wird.

Bei der im wesentlichen nach unten gerichteten Leuchtrichtung 26 ist die Leuchte 10 als Ausstiegsleuchte bzw. seitliche Fahrbahnbeleuchtung im Türbereich geeignet. Beim Verschwenken der Leuchte 10 in Gegenfahrtrichtung kann sie z. B. zum Beleuchten des Türgriffes eingesetzt werden. Strahlt die Leuchte 10 entgegengesetzt zur Fahrtrichtung Licht ab, kann diese Leuchtenfunktion beispielsweise in Gefahrensituationen oder Notfällen als zusätzliche Warnleuchte dienen.

Fig. 2 zeigt eine verstellbare Leuchte 10 mit der zugehörigen Verstelleinrichtung und einem Antrieb innerhalb des Spiegelkopfes 7. Die Leuchte 10 befindet sich im Leuchtenraum 4 und hat das rohrförmige Leuchtengehäuse 11 mit dem Reflektor 24, in dessen Brennpunkt das Leuchtmittel 23 sitzt. Der Leuchtenträger 20 hält die Leuchte 10 über den Tragarm 12, an dessen freies Ende das Leuchtengehäuse 11 über das Gelenk 14 mit seinem Gelenkflansch 13 angelenkt ist. An den Gelenkflansch 15 ist über das Gelenk 16 das eine Ende der Schubstange 22 angelenkt.

Um das Leuchtengehäuse 11 zur Seite zu verschwenken, wird die Schubstange 22 aus dem Leuchtenträger 20 ausgefahren. Hierzu ist das im Leuchtenträger 20 liegende Ende der Schubstange 22 mit einer Zahnstange 51 über ein Gelenk 45 verbunden. Die Zahnstange 51 ragt aus dem Leuchtenträger 20 und ist mit einem Ritzel 53 eines Elektromotors 52 in Eingriff. Er befindet sich außerhalb des Leuchtenraumes 4 innerhalb des Gehäuses 2 des Spiegelkopfes 7. Da die Schubstange 22 leuchtenseitig über das Gelenk 16 mit dem Leuchtengehäuse 11 und zahnstangenseitig über das Gelenk 45 mit der Zahnstange 51 verbunden ist, wird ein Verklemmen der Leuchte 10 bzw. des Leuchtengehäuses 11 vermieden.

Die Zahnstange 51 ist außerhalb des Leuchtenträgers 20 durch Führungen 50 geführt, die im Gehäuse 2 des Spiegelkopfes 7 vorgesehen sind.

Wird die Zahnstange 51 in Richtung auf die Leuchte 10 verschoben, kann die Schubstange 22 eine der Schwenkbewegung der Leuchte 10 angepaßte Schrägstellung einnehmen. Hierzu ist das Gelenk 45 vorzugsweise als Kugelgelenk ausgebildet. Durch die Verwendung eines Kugelgelenks kann bei einem Verschwenken in Fahrtrichtung die gesamte Antriebseinheit, bestehend aus Zahnstange 51 und elektrischem Motor 52 sowie den Führungen 50 für die Zahnstange 51, in ihrer Einbaulage verbleiben. Ansonsten müßte beim Verschwenken der Leuchte 10 in Fahrtrichtung die Schubstange 22, die Zahnstange 51, die Führungen 50 und der Antriebsmotor 52 mit Antriebsritzel 53 die Schubbewegung mit ausführen.

Der Leuchtenträger 20 ist in der seitlichen Begrenzung 6 des Leuchtenraumes 4 drehbar gelagert. An seinem von der Leuchte 10 abgewandten Ende ist der Leuchtenträger 20 mit einem Flansch 41 versehen, der an seiner Mantelfläche 42 eine Verzahnung 40 aufweist. Sie greift in die Verzahnung eines Antriebsritzels 39 ein, das über eine Antriebswelle 38 mit einem elektrischen Motor 37 verbunden ist, der im Gehäuse 2 des Spiegelkopfes 7 außerhalb des Leuchtenraumes 4 angeordnet ist.

Beide Elektromotoren 37, 52 können gleichzeitig angesteuert werden, so daß die Leuchte 10 eine kombinierte Bewegung über das Schwenken des Leuchtenträgers 20 und durch die Verschiebung der Zahnstange 51 ausführen kann. Auf diese Weise lassen sich entsprechend der zulässigen Schwenkwinkel der Leuchte 10 beliebig viele Zwischenstellungen einstellen. Eine derartige Kombination der Bewegungen ist dann von Interesse, wenn der Außenrückblickspiegel 1 beispielsweise aus seiner Betriebsposition in eine Parkposition geschwenkt wird. Hierbei ist es notwendig, für die Positionsänderung des Außenrückblickspiegels beispielsweise bei einem Einsatz der Leuchte 10 als Positionsleuchte entsprechende Korrekturen der Leuchtenposition vorzunehmen.

Es ist ferner denkbar, die elektrischen Motoren 37, 52 auch als Verstellantriebe für einen Spiegelglasträger zu verwenden. Selbstverständlich ist bei einer solchen Ausbildung eine entsprechende Anbindung über Getriebe an den Spiegelglasträger erforderlich.

Eine weitere, nicht dargestellte kostengünstige Aufhängung der Leuchte 10 besteht darin, das Gelenk 14 der Leuchte einstückig über ein Filmgelenk mit dem Tragarm 12 verbunden ist. Schließlich können die Zahnstange 51 und die Schubstange 22 als Bauteil einstückig ausgebildet sein und mit der Leuchte über ein während des Herstellungsprozesses angeformtes Filmgelenk verbunden werden. Für die Verwendung von Filmgelenken ist die Ausführung des Leuchtengehäuses 11 und der Gelenke 14, 16 wie auch der Zahnstange 51 und des Leuchtenträgers 20 aus Kunststoff vorteilhaft. Hierbei kann beispielsweise die Zahnstange 51 elastisch verformbar ausgebildet sein. Die Zahnstange 51 wird bei einem seitlichen Verschwenken der Leuchte 10 elastisch gebogen, wodurch ein Verklemmen bei einem seitlichen Verschwenken der Leuchte verhindert wird.

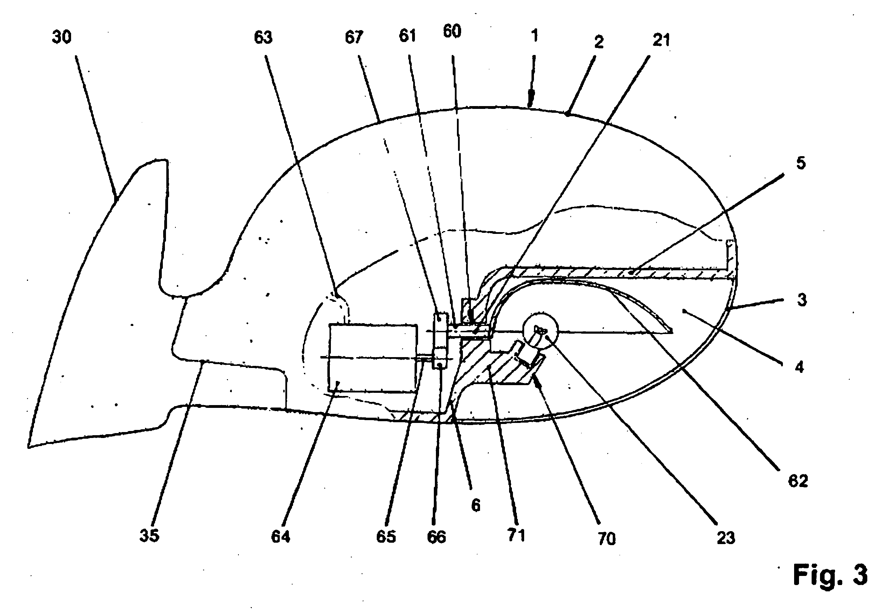

Fig. 3 zeigt eine Leuchte 10 mit verstellbarem Reflektor 62 und zugehöriger Verstelleinrichtung. Von der seitlichen Begrenzung 6 steht quer in den Leuchtenraum 4 ein Haltearm 71 für einen Leuchtmittelhalter 70 zur Aufnahme des Leuchtmittels 23 ab. Der Haltearm 71 ist vorteilhaft einstückig mit der Begrenzung 6 und/oder dem Leuchtenhalter 70 ausgebildet. Im Unterschied zu den Ausführungsformen gemäß den Fig. 1 und 2 wird das Leuchtmittel 23 nicht verschwenkt. Es ist über den Haltearm 71 und den Leuchtmittelhalter 70 fest mit der seitlichen Begrenzung 6 und somit mit dem Spiegelgehäuse 2 verbunden. Um eine Umlenkung des vom Leuchtmittel 23 erzeugten Lichts in Fahrtrichtung oder in Richtung auf die seitlich vom Fahrzeug befindliche Fahrbahn zu ermöglichen, ist der Reflektor 62 um die horizontale Achse 21 schwenkbar. Der Reflektor 62 ist mit seinem zur Fahrzeugseite weisenden Ende an einem zylindrischen Reflektorträger 61 befestigt, dessen Längsachse die Drehachse 21 bildet. Der Reflektorträger 61 wird in der seitlichen Begrenzung 6 in einer Lagerung 60 gelagert. Das aus dem Leuchtenraum 4 ragende Ende des Reflektorträgers 61 trägt ein Zahnrad 67, das mit einem Antriebsritzel 66 einer Antriebswelle 65 eines Elektromotors 64 kämmt. Mit ihm kann der Reflektorträger 61 über das Zahnradgetriebe 66, 67 um die Achse 21 gedreht werden. Der Reflektor 62 wird dementsprechend verschwenkt. Bei diesem Ausführungsbeispiel kann das vom Leuchtmittel 23 erzeugte Licht nur in Höhenrichtung, nicht jedoch in seitliche Richtung gelenkt werden.

Die Leuchte 10 gemäß Fig. 3 kann sehr einfach und kostengünstig hergestellt werden. Sie kann sowohl den das Fahrzeug umgebenden Fahrbahnbereich beleuchten als auch als Positionslicht oder als Tagfahrlicht eingesetzt werden.

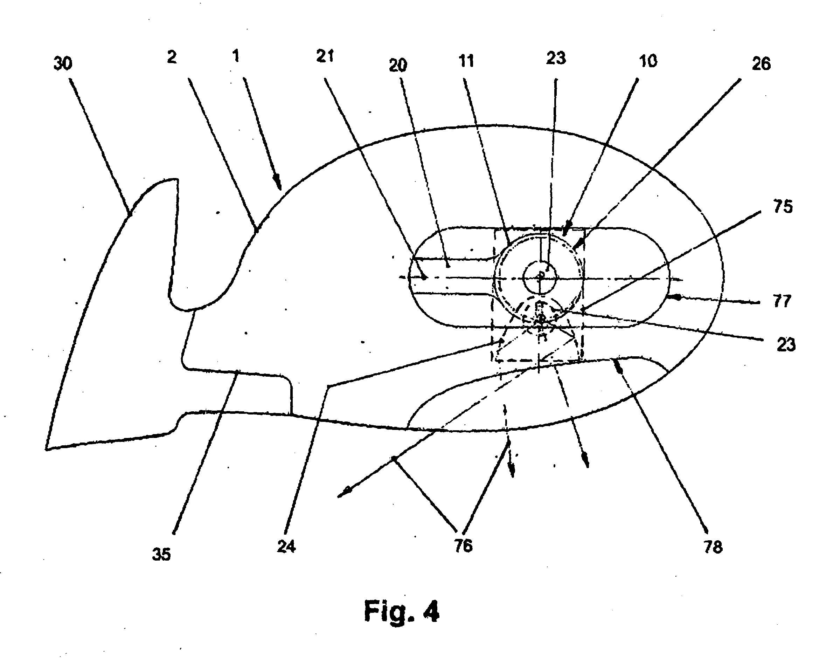

Eine weitere kostengünstige und einfache nicht-erfindungsgemäße Ausbildung ist in den Fig. 4 bis 6 dargestellt. Der Außenrückblickspiegel 1 ist mit zwei Lichtfenstern 77, 78 und einer zwischen diesen verstellbaren Leuchte 10 versehen. Sie hat das zylindrische Gehäuse 11 entsprechend den Fig. 1 und 2. Im Gehäuse 11 sind der Reflektor 24 und das Leuchtmittel 23 untergebracht. Das Gehäuse 11 ist am Leuchtenträger 20 vorgesehen, der um die im wesentlichen zur Seite des Fahrzeuges weisende horizontale Achse 21 drehbar ist. Der Leuchtenträger 20 erstreckt sich vom Leuchtengehäuse 11 aus im wesentlichen horizontal in Richtung auf den Spiegelfuß 30. Da das Leuchtengehäuse 11 nur um die horizontale Achse 21 drehbar ist, ist eine seitliche Verstellung der Leuchte 10 nicht möglich.

Der Leuchtenträger 20 und die Leuchte 10 sind vorteilhaft einstückig miteinander ausgebildet, wobei der Leuchtenträger schwenkbar im Spiegelgehäuse 2 gelagert ist. Vorzugsweise ist die Leuchte 10 nur dann in Betrieb, wenn sich die Leuchte in Abstrahlrichtung eines der in Fig. 4 dargestellten Lichtfenster 77, 78 befindet. Die vom Leuchtmittel 23 erzeugten Lichtstrahlen 76 werden über den Reflektor 24 durch die Lichtfenster 77, 78 nach außen abgestrahlt.

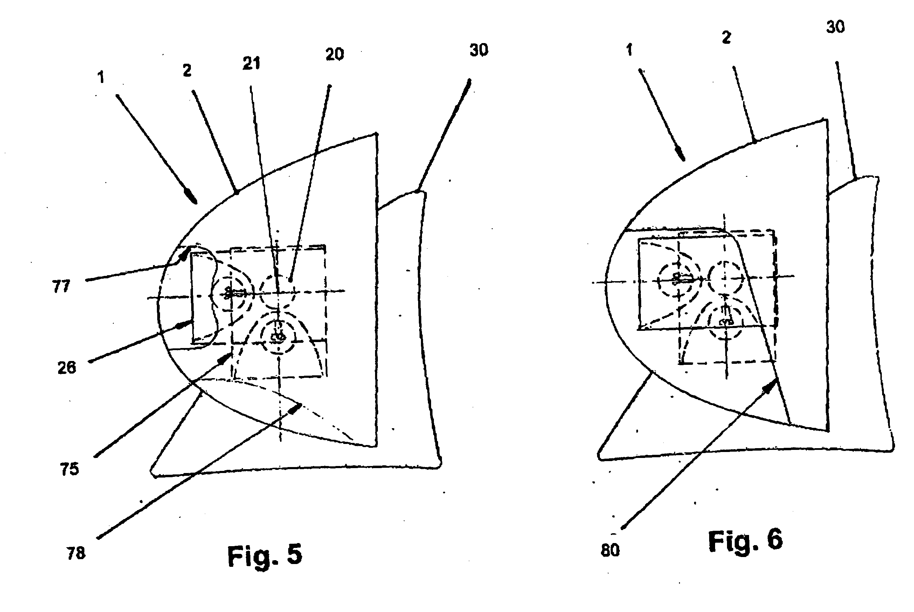

Ist das Leuchtengehäuse 11 so geschwenkt, daß seine Längsachse in Fahrtrichtung des Kraftfahrzeuges liegt (ausgezogene Linien in Fig. 4), dann wird das Licht nur durch das Lichtfenster 77 abgestrahlt. Wird das Leuchtengehäuse 12 um die Achse 21 nach unten geschwenkt, dann tritt das Licht durch das Lichtfenster 78 aus. Da das Lichtfenster 77 an der Rückwand des Spiegelgehäuses 2 vorgesehen ist, wird das Licht in Fahrtrichtung nach vom abgestrahlt. Das Lichtfenster 78 befindet sich etwa am unteren Rand des Spiegelgehäuses 2. Das austretende Licht fällt dadurch nach unten auf den Boden im Bereich neben dem Kraftfahrzeug. Wird die Leuchte 10 aus der horizontalen Leuchtposition des Lichtfensters 77 in die untere Position des Lichtfensters 78 verschwenkt, wird im Übergangsbereich zwischen beiden Lichtfenstern 77, 78 kein Licht nach außen abgegeben. Dies kann beispielsweise dadurch erreicht werden, daß das Spiegelgehäuse 2 aus einem nicht transparenten Material besteht und nur im Bereich der Lichtfenster 77, 78 entsprechend der Größe und der Form der Lichtfenster lichtdurchlässig ist. Das übrige Spiegelgehäuse 2 kann mit einer lichtundurchlässigen Oberflächenbeschichtung versehen sein. Bei einer weiteren Ausführungsform sind im lichtundurchlässigen Spiegelgehäuse 2 Ausnehmungen zur Aufnahme von eingepaßten Lichtscheiben der Lichtfenster 77, 78 vorgesehen. In Fig. 5 sind die beiden beschriebenen Positionen der Leuchte 10 dargestellt.

Gemäß Fig. 6 ist anstelle der beiden mit Abstand voneinander liegenden Lichtfenster 77, 78 eine den ganzen Schwenkbereich der Leuchte 10 umfassende lichtdurchlässige Lichtscheibe 80 vorgesehen. Sie ist relativ groß und einstückig ausgebildet und hat den Vorteil, daß auch in Zwischenpositionen der Leuchte 10 Licht nach außen gelangen kann. So kann die Leuchte 10 beispielsweise bei in Parkstellung befindlichem Spiegelkopf 7 so eingestellt werden, daß das Licht durch die Lichtscheibe 80 nach unten in den Bereich neben dem Kraftfahrzeug abgestrahlt wird.

## Patentansprüche

1. Außenrückblickspiegel für Fahrzeuge mit einem Spiegelgehäuse (2) mit wenigstens einem Lichtfenster, hinter dem sich wenigstens eine Leuchte (10) befindet, die wenigstens ein Leuchtmittel aufweist, wobei im Betrieb des Leuchtmittels das Licht durch das Lichtfenster mindestens in Fahrtrichtung des Fahrzeugs nach außen tritt,
**dadurch gekennzeichnet, dass** zumindest ein Teil der Leuchte (10) über zwei mit Abstand zueinander angeordneten Gelenkstellen (14, 16) gegenüber dem Spiegelgehäuse (2) schwenkbar gelagert ist.

2. Spiegel nach Anspruch 1, **dadurch gekennzeichnet, dass** die Leuchte (10) über die eine Gelenkstelle (14) mit einem Tragarm (12) und über die andere Gelenkstelle (16) mit einer Schubstange (22) gelenkig verbunden ist.

3. Rückblickspiegel nach Anspruch 2,
**dadurch gekennzeichnet, dass** die Schubstange (22) mit dem einen Ende gelenkig mit der Leuchte (10) und mit dem anderen Ende gelenkig mit einer Zahnstange (51) verbunden ist.

4. Spiegel nach Anspruch 3,
**dadurch gekennzeichnet, daß** die Gelenkverbindung zwischen der Zahnstange (51) und der Schubstange (22) durch ein Kugelgelenk (45) gebildet ist.

5. Spiegel nach Anspruch 2,
**dadurch gekennzeichnet, daß** der Tragarm (12) zur Halterung der Leuchte (10) mit einem Leuchtenträger (20) verbunden ist.

## Claims

1. An exterior rearview mirror for vehicles comprising a mirror housing (2) with at least one light window, behind which at least one light (10) is disposed, which comprises at least one illuminant, where the light passes through the light window to the outside during the operation of the illuminant at least in driving direction of the vehicle, wherein at least a portion of the light (10) is pivotably supported relative to the mirror housing (2) at two articulated joint locations (14, 16), disposed at a distance relative to each other.

2. A mirror according to claim 1, wherein the light (10) is connected through one articulating joint location (14) to a support arm (12), and through the other articulating joint location (16) to a push rod (22) in an articulating manner.

3. A rearview mirror according to claim (2), wherein the pushrod (22) is connected at one end in an articulating manner to the light (10) and at the other end in an articulating manner to a gear rack (51).

4. A mirror according to claim 3, wherein the articulated joint connection between the gear rack (51) and the pushrod (22) is formed by a ball joint.

5. A mirror according to claim 2, wherein the support arm (12) is connected to a light support (20) for supporting the light (10).

## Revendications

1. Rétroviseur extérieur pour véhicules doté d'un boîtier à miroir (2) avec au moins une fenêtre lumineuse, derrière laquelle est installée au moins une lampe (10), laquelle comporte au moins un moyen d'éclairage, la lumière étant diffusée par la fenêtre lumineuse dans la direction de marche du véhicule lorsque le moyen d'éclairage fonctionné, **caractérisé en ce qu'**une partic au moins de la lampe (10) est placée de façon à pivoter par rapport au boîtier à miroir (2) via deux charnières (14, 16) disposées à distance l'une de l'autre.

2. Rétroviseur selon la revendication 1, **caractérisé en ce que** la lampe (10) est reliée de façon à pivoter à un bras de support (12) via une charnière (14) et à un levier de commande (22) via l'autre charnière (16).

3. Rétroviseur selon la revendication 2, **caractérisé en ce que** le levier de commande (22) est relié à l'une des extrémités articulée avec la lampe (10) et à l'autre extrémité articulée avec une crémaillère (51).

4. Rétroviseur selon la revendication 3, **caractérisé en ce que** la liaison articulée entre la crémaillère (51) et le levier de commande (22) est formée par une articulation sphérique (45).

5. Rétroviseur selon la revendication 2, **caractérisé en ce que** le bras de support (12) destiné à supporter la lampe (10) est relié à un support de lampe (20).
